# EUROPEAN PATENT SPECIFICATION

(11) **EP 3 457 750 B1**
(45) Date of publication and mention of the grant of the patent: **15.02.2023**
(21) Application number: 17795462.5
(22) Date of filing: 03.05.2017
(51) Int. Cl.: H04W 76/19, H04W 36/00, H04W 76/22, H04W 76/27

(54) **UE CONTEXT RESUME**
BENUTZGERÄTEKONTEXT-WIEDERAUFNAHME
RESUME DU CONTEXT D'UN EQUIPEMENT UTILISATEUR

(30) Priority: 11.05.2016 CN 201610311749
(43) Date of publication of application: 20.03.2019
(73) Proprietor: ZTE Corporation, Shenzhen, Guangdong 518057 (CN)
(72) Inventor: GAO, Yin, Shenzhen Guangdong 518057 (CN)
(74) Representative: Regimbeau
(86) International application number: PCT/CN2017/082836
(87) International publication number: WO 2017/193844

(56) References cited:
- WO-A1-2012/050842
- WO-A1-2014/013057
- CN-A- 104 737 619
- CN-A- 104 823 478
- ZTE: "Complete the S1 Resume procedure", 3GPP DRAFT; R3-161213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160523 - 20160527 22 May 2016 (2016-05-22), XP051106016, Retrieved from the Internet: URL:http://www.3gpp.org/ftp/Meetings_3GPP_ SYNC/RAN3/Docs/ [retrieved on 2016-05-22]
- ERICSSON: "Unsuccessful operation of the S1 UE Context Resume procedure", 3GPP DRAFT; R3-160938, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bengaluru, India; 20160411 - 20160415 20 April 2016 (2016-04-20), XP051095034, Retrieved from the Internet: URL:http://www.3gpp.org/ftp/tsg_ran/WG3_Iu /TSGR3_91bis/Docs/ [retrieved on 2016-04-20]
- ZTE: "Discussion on NB-IoT Solutions", 3GPP DRAFT; R3-160052, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Budapest, HU; 20160120 - 20160122 19 January 2016 (2016-01-19), XP051055951, Retrieved from the Internet: URL:http://www.3gpp.org/ftp/Meetings_3GPP_ SYNC/RAN3/Docs/ [retrieved on 2016-01-19]
- ZTE: "Context Fetch and Resume procedure with different eNBs", 3GPP DRAFT; R3-160793, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India; 20160411 - 20160415 1 April 2016 (2016-04-01), XP051082942, Retrieved from the Internet: URL:http://www.3gpp.org/ftp/tsg_ran/WG3_Iu /TSGR3_91bis/Docs/ [retrieved on 2016-04-01]
- LG ELECTRONICS INC: "Further Discussion on Resume procedure for solution 18", 3GPP DRAFT; R3-160757 FURTHER DISCUSSION ON RESUME PROCEDURE FOR SOLUTION 18_FIN, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. RAN WG3, no. Bangalore, India; 20160411 - 20160415 2 April 2016 (2016-04-02), XP051083026, Retrieved from the Internet: URL:http://www.3gpp.org/ftp/tsg_ran/WG3_Iu /TSGR3_91bis/Docs/ [retrieved on 2016-04-02]
- ZTE: "Suspend and resume within the same eNB", 3GPP DRAFT; R3-160792, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India; 20160411 - 20160415 1 April 2016 (2016-04-01), XP051082941, Retrieved from the Internet: URL:http://www.3gpp.org/ftp/tsg_ran/WG3_Iu /TSGR3_91bis/Docs/ [retrieved on 2016-04-01]
- SAMSUNG: "The user plane CIOT optimization", 3GPP DRAFT; R3-160169_USER PLANE CIOT OPTIMIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. St. Julian's, Malta; 20160215 - 20160219 14 February 2016 (2016-02-14), XP051056048, Retrieved from the Internet: URL:http://www.3gpp.org/ftp/Meetings_3GPP_ SYNC/RAN3/Docs/ [retrieved on 2016-02-14]
- SAMSUNG: "The resume of the UE bearer", 3GPP DRAFT; R3-160030_RESUME OF THE UE BEARER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Budapest, HU; 20160120 - 20160122 19 January 2016 (2016-01-19), XP051055930, Retrieved from the Internet: URL:http://www.3gpp.org/ftp/Meetings_3GPP_ SYNC/RAN3/Docs/ [retrieved on 2016-01-19]

## Description

### TECHNICAL FIELD

The present invention relates to, but is not limited to, mobile communications and, in particular, relates to user equipment context resume methods and apparatus.

### BACKGROUND

With the development of communication technology, tens of billions of objects in the future need to access the network in the age of Internet of Things (IoT). However, unlike the communication between people which is always pursuing a high speed and a large bandwidth, in the communication between things, a large number of devices transmit a small amount of data or transmit data at a low frequency after accessing the network. Moreover, unlike the communication between people where the devices need to be charged frequently, many devices requires extremely low power consumption to support the communication thereof in consideration of particularity of their environment and their large number. Devices (e.g., a great number of water meters, fire extinguishers, sprinkler switches in tens of thousands of hectares of fertile farmland, weather stations in harsh environments) only require very low frequency and very small capacity of data transmission after accessing the network. Furthermore, it is time-consuming and labor-intensive to power these devices externally. In addition, the fourth generation mobile communication technology (4G) and the fifth generation mobile communication technology (5G) cellular network cannot meet the requirements of these devices. Therefore, a network with small bandwidth, low power consumption and large coverage is the best choice. In this sense, the development of IoT connecting everything has given rise to a small-bandwidth and low-power cellular network. In the research of the machine type communications (MTC) technology, for low-cost and low-throughput type user equipment, a research topic of the NarrowBand-Internet of Things (NB-IoT) has been proposed, that is, a low-throughput wireless communication service is provided for NB-IoT low-cost user equipment (UE) in a band of 200 kHz frequency. For NarrowBand-Cellular Internet of Things (NB-CIOT), a user may configure a dedicated core network. An operator may manage special-purpose terminal devices in the dedicated core network so as to distinguish them from ordinary users to minimize the impact on ordinary users. At the same time, the NB-IoT introduces different uplink narrowband access capabilities and optimized data transmission schemes for characteristics of the UE including low cost and small data transmission. The optimized data transmission scheme includes optimization schemes based on user plane and control plane transmission. For smartphone users, the optimization schemes based on user plane and control plane transmission may also be extended.

In the related user plane transmission optimization scheme, similar to the Long Term Evolution (LTE) process, data is transmitted via a data resource bearer (DRB), and signaling is still transmitted via a signaling resource bearer SRB1 or SRB2. The current standard has clarified that an NB-IoT user is configured with only one DRB, while a martphone user supporting the user plane scheme may support multiple bearers. The network side introduces suspend and resume processes. The base station and the mobility management entity (MME) store user context information in the suspend process and rapidly activate a UE context in the resume process. The suspending and resuming of the SI interface are both initiated by the base station. When a terminal needs to transmit data or "data+signaling" in an idle state, the terminal may directly use the resume mechanism instead of processes such as air interface encryption and access stratum (AS) bearer establishment. The UE context information includes identity information of the user, information related to user on identity S1 interface, information related to user security, bearer information and information related to quality of service (e.g., user equipment aggregate maximum bit rate (UE AMBR), quality of service (QoS) related to the bearer). However, the current resume mechanism does not consider how the core network implements the user access control and the update of UE related information stored locally by MME when the user resumes.

In view of the problem described above, no effective solution has yet been proposed. Further relevant technologies are also known from ERICSSON: "Unsuccessful operation of the S1 UE Context Resume procedure", 3GPP DRAFT; R3-160938, MOBILE COMPETENCE CENTRE; 650, ROUTE DES LUCIOLES; F-06921 SOPHIA-ANTIPOLIS CEDEX; FRANCE, vol. RAN WG3, no. Bengaluru, India; 20160411-20160415, which relates to unsuccessful operation of the S1 UE Context Resume procedure, ZTE: "Discussion on NB-loT Solutions", 3GPP DRAFT; R3-160052, MOBILE COMPETENCE CENTRE; 650, ROUTE DES LUCIOLES; F-06921 SOPHIA-ANTIPOLIS CEDEX; FRANCE, vol. RAN WG3, no. Budapest, HU; 20160120-20160122, which relates to discussion on NB-loT Solutions, ZTE: "Context Fetch and Resume procedure with different eNBs", 3GPP DRAFT; R3-160793, MOBILE COMPETENCE CENTRE; 650, ROUTE DES LUCIOLES; F-06921 SOPHIA-ANTIPOLIS CEDEX; FRANCE, vol. RAN WG3, no. Bangalore, India; 20160411- 20160415, which relates to Context Fetch and Resume procedure with different eNBs, WO 2012/050842 A1 (RESEARCH IN MOTION) 19 April 2012, which relates to a method, system and device are provided for managing LIPA and/or SIPTO connection releases when UE moves out of residential/enterprise network coverage in case service continuity is not supported for the LIPA/SIPTO PDN connection(s), and ZTE: "Suspend and resume within the same eNB", 3GPP DRAFT; R3-160792, vol. RAN WG3, no. Bangalore, India; 20160411 - 20160415 1 April 2016, which relates to Suspend and resume within the same eNB.

### SUMMARY

The following is a summary of the subject matter described herein in detail. The feature of the method and apparatus according to the present invention are defined in the independent claims. Further improvements are provided in the dependent claims.

Embodiments of the present invention provide a user equipment context resume method and apparatus to solve at least the problem in the existing art in which a network side device cannot implement user access control or cannot update locally-stored user information in the suspend or resume mechanism.

An embodiment of the present invention provides a user equipment context resume method, performed by a core network element device. The method includes: receiving a user equipment (UE) context resume request message sent from a base station, where the UE context resume request message carries at least one of the following specified information: an evolved universal terrestrial radio access network (E-UTRAN) cell global identifier (ECGI) of a serving cell in which the UE performs resuming; a closed subscriber group identity (CSG ID) of the serving cell in which the UE performs resuming; a cell access mode of the serving cell in which the UE performs resuming; a local IP access (LIPA) local gateway address of a base station in which the UE performs resuming; indication information for indicating whether the base station in which the UE performs resuming is a relay or not; broadband forum (BBF) address information of the base station in which the UE performs resuming; a selected IP traffic offload (SIPTO) local gateway address of the base station in which the UE performs resuming; and a local HeNB network identity (LHN ID) of a local HeNB network to which the base station in which the UE performs resuming belongs; wherein the specified information is used for at least one of user access control and performing update of information about a UE; performing at least one of the following operations on the UE according to the specified information: the user access control and the update of the information about the UE.

Another embodiment of the present invention provides a user equipment context resume method, performed by a base station. The method includes: sending, by a base station, a user equipment (UE) context resume request message to a network side device, where the UE context resume request message carries at least one of the following specified information: the evolved universal terrestrial radio access network cell global identifier (ECGI) of a serving cell in which the UE performs resuming; the closed subscriber group identity (CSG ID) of the serving cell in which the UE performs resuming; the cell access mode of the serving cell in which the UE performs resuming; the local IP access (LIPA) local gateway address of a base station in which the UE performs resuming; the indication information for indicating whether the base station in which the UE performs resuming is a relay or not; the broadband forum (BBF) address information of the base station in which the UE performs resuming; the selected IP traffic offload (SIPTO) local gateway address of the base station in which the UE performs resuming; and the local HeNB network identity (LHN ID) of a local HeNB network to which the base station in which the UE performs resuming belongs; wherein the specified information is used for at least one of user access control and performing update of information about a UE. Another embodiment of the present invention provides a core network element device. The device includes: a receiving module which is configured to receive a user equipment (UE) context resume request message sent from a base station, where the UE context resume request message carries at least one of the following specified information: the evolved universal terrestrial radio access network cell global identifier (ECGI) of a serving cell in which the UE performs resuming; the closed subscriber group identity (CSG ID) of the serving cell in which the UE performs resuming; the cell access mode of the serving cell in which the UE performs resuming; the local IP access (LIPA) local gateway address of a base station in which the UE performs resuming; the indication information for indicating whether the base station in which the UE performs resuming is a relay or not; the broadband forum (BBF) address information of the base station in which the UE performs resuming; the selected IP traffic offload (SIPTO) local gateway address of the base station in which the UE performs resuming; and the local HeNB network identity (LHN ID) of a local HeNB network to which the base station in which the UE performs resuming belongs; wherein the specified information is used for at least one of user access control and performing update of information about a UE; a processing module, which is configured to perform at least one of the following operations on the LTE according to the specified information: the user access control and the update of the information about the UE.

Another embodiment of the present invention provides a base station. The base station includes: a sending module, which is configured to send a UE context resume request message to a network side device, where the UE context resume request message carries at least one of the following specified information: an evolved universal terrestrial radio access network cell global identifier, ECGI, of a serving cell in which the UE performs resuming; a closed subscriber group identity, CSG ID, of the serving cell in which the UE performs resuming; a cell access mode of the serving cell in which the UE performs resuming; a local IP access, LIPA, local gateway address of a base station in which the UE performs resuming; indication information for indicating whether the base station in which the UE performs resuming is a relay or not; broadband forum, BBF, address information of the base station in which the UE performs resuming; a selected IP traffic offload, SIPTO, local gateway address of the base station in which the UE performs resuming; and a local HeNB network identity, LHN ID, of a local HeNB network to which the base station in which the UE performs resuming belongs; wherein the specified information is used for at least one of user access control and performing update of information about a UE.

In this invention, since at least one specific information of information for user access control and information for performing the update of information about a user is carried in a UE context resume request message, a core network can obtain the specific information, thereby solving the problem in the existing art in which a network side device cannot implement user access control or cannot update locally-stored user information in the suspend or resume mechanism.

Other aspects can be understood after the drawings and detailed description are read and understood.

### BRIEF DESCRIPTION OF DRAWINGS

The drawings described herein are used to provide a further understanding of the present invention and form a part of the present invention. The exemplary embodiments and descriptions thereof in the present invention are used to explain the present invention and not to limit the present invention in any improper way. In the drawings:
FIG. 1 is a schematic diagram 1 of network architecture according to an embodiment of the present invention;
FIG. 2 is a schematic diagram 2 of network architecture according to an embodiment of the present invention;
FIG. 3 is a schematic diagram 3 of network architecture according to an embodiment of the present invention;
FIG. 4 is a flowchart 1 of a user equipment context resume method according to an embodiment of the present invention;
FIG. 5 is a flowchart 2 of a user equipment context resume method according to an embodiment of the present invention;
FIG. 6 is a flowchart of a user equipment context resume method in a scenario illustrated in FIG. 1 according to an exemplary embodiment of the present invention;
FIG. 7 is a flowchart of a user equipment context resume method in a scenario illustrated in FIG. 2 according to an exemplary embodiment of the present invention;
FIG. 8 is a flowchart of a user equipment context resume method in a scenario illustrated in FIG. 3 according to an exemplary embodiment of the present invention;
FIG. 9 is a block diagram 1 of a user equipment context resume apparatus according to an embodiment of the present invention; and
FIG. 10 is a block diagram 2 of a user equipment context resume apparatus according to an embodiment of the present invention.

### DETAILED DESCRIPTION

The present invention will be described hereinafter in detail through embodiments with reference to the accompanying drawings. It is to be noted that if not in collision, the embodiments and features therein in the present invention may be combined with each other.

It is to be noted that the terms "first", "second" and the like in the description, claims and drawings of the present invention are used to distinguish between similar objects and are not necessarily used to describe a particular order or sequence.

### Embodiment 1

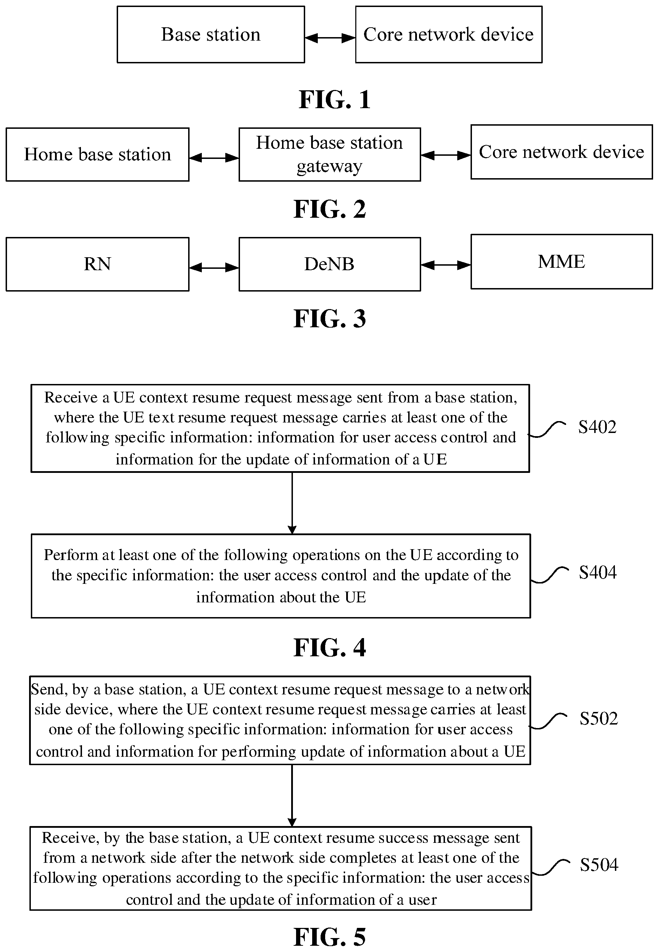

This embodiment of the present invention may be run on network architecture illustrated in FIG. 1, FIG. 2 or FIG. 3. As shown in FIG. 1, the network architecture includes a base station and a core network device. The base station and the core network device interact with each other. As shown in FIG. 2, the network architecture includes a home base station, a home base station gateway and a core network device. The home base station interacts with the core network device via the home base station gateway. As shown in FIG. 3, the network architecture includes a relay node (RN), a donor base station (DeNB) and a mobility management entity (MME). The RN interacts with the MME via the DeNB. It is to be noted that this embodiment of the present invention may be run on the network architecture illustrated in FIG. 1, FIG. 2 or FIG. 3, but it is not limited thereto.

This embodiment provides a user equipment context resume method executed on the network architecture. FIG. 4 is a flowchart 1 of a user equipment context resume method according to an embodiment of the present invention. As shown in FIG. 4, the method includes steps described below.

In step S402, a user equipment (UE) context resume request message sent from a base station is received, where the UE context resume request message carries at least one of the following specific information: information for user access control and information for performing update of information about a UE.

In step S404, at least one of the following operations is performed on the UE according to the specific information: the user access control and the update of the information about the UE.

Through above-mentioned steps, since at least one specific information of information for user access control and information for performing the update of information about a user is carried in the UE context resume request message, a network side device obtains the specific information, thereby solving the problem in the existing art in which the network side device cannot implement user access control or cannot update locally-stored user information in the suspend or resume mechanism.

It is to be noted that the specific information may include at least one of: a tracking area identity (TAI) of a tracking area in which the UE sends a non-access stratum (NAS) message; an evolved universal terrestrial radio access network cell global identifier (ECGI) of a serving cell in which the UE performs resuming; a radio resource control (RRC) setup reason for indicating an RRC resume request reason reported by the UE; an S-temporary mobile station identity (S-TMSI); a closed subscriber group identity (CSG ID) of the serving cell in which the UE performs resuming; a global unique mobility management entity (MME) identity (GUMMEI); a cell access mode of the serving cell in which the UE performs resuming; a local IP access (LIPA) local gateway address of a base station in which the UE performs resuming; indication information for indicating whether the base station in which the UE performs resuming is a relay or not; GUMMEI type information; broadband forum (BBF) address information of the base station in which the UE performs resuming; a selected IP traffic offload (SIPTO) local gateway address of the base station in which the UE performs resuming; and a local HeNB network identity (LHN ID) of a local HeNB network to which the base station in which the UE performs resuming belongs.

It is to be noted that the RRC setup reason may include signaling triggering or data triggering, but it is not limited thereto; the cell access mode may include a hybrid mode or a close mode, but it is not limited thereto; the GUMMEI may include a public land mobile network identity (PLMN ID) of the MME, an identity (ID) of a group to which the MME belongs, or an MME code (MMEC), but it is not limited thereto; the CSG ID, the cell access mode and the BBF address information of the base station may exist only when the serving cell is a home base station cell; the LHN ID may be used for implementing an SIPTO service under independent gateway architecture.

It is to be noted that information included in the above-mentioned specific information may be determined according to a scenario.

In an embodiment of the present invention, when the base station is a home base station, the above-mentioned step S402 may be: receiving the UE context resume request message sent from a home base station gateway of the home base station after the home base station gateway of the home base station performs a non-access stratum node selection function (NNSF) by using at least one of the following information included in the UE context resume request message sent from the home base station to the home base station gateway: S-TMSI, CUMMEI and CUMMEI type information, where the specific information carried by the UE context resume request message sent from the home base station gateway includes at least one of the following: the TAI, the ECGI, the RRC setup reason, the CSG ID, the cell access mode, the LIPA local gateway address, the BBF address information, the SIPTO local gateway address and the LHN ID.

That is, when the base station is the home base station, the home base station gateway first receives the UE context resume request message sent from the home base station, where the UE context resume request message at least carries one or more of the S-TMSI, the GUMMEI and the GUMMEI type information in the above-mentioned specific information; and then the home base station gateway sends the UE context resume request message to the network side device, where the UE context resume request message sent from the home base station gateway does not need to include the S-TMSI, the GUMMEI or the GUMMEI type information.

In an embodiment of the present invention, when the base station is a donor base station, the above-mentioned specific information may include at least one of: the TAI, the ECGI, the RRC setup reason, the LIPA local gateway address, the SIPTO local gateway address and the LHN ID.

It is to be noted that the update of the information about the UE according to the specific information may be that specific information in information of the UE locally stored by the network side device is updated into the above-mentioned specific information carried in the above-mentioned UE context resume request message.

It is to be noted that the above-mentioned steps may, but not limited to, be executed by the network side device, such as the MME. The above-mentioned base station may be a home base station, a general base station or a donor base station, but it is not limited thereto.

Another embodiment of the present invention further provides a user equipment context resume method. FIG. 5 is a flowchart 2 of a user equipment context resume method according to an embodiment of the present invention. As shown in FIG. 5, the method includes steps described below.

In step S502, the base station sends the UE context resume request message to the network side device, where the UE context resume request message carries at least one of the following specific information: information for user access control and information for performing update of information about the UE.

In step S504, the base station receives the UE context resume success message sent from the network side device after at least one of the following operations is performed on the network side device according to the specific information: the user access control and the update of the information about a user.

Through above-mentioned steps, since at least one specific information of information for user access control and information for performing the update of information about the user is carried in the UE context resume request message, the network side device obtains the specific information, thereby solving the problem in the existing art in which the network side device cannot implement user access control or cannot update locally-stored user information in the suspend or resume mechanism.

It is to be noted that the specific information may include at least one of: the tracking area identity (TAI) of a tracking area in which the UE sends a non-access stratum (NAS) message; the evolved universal terrestrial radio access network cell global identifier (ECGI) of a serving cell in which the UE performs resuming; the radio resource control (RRC) setup reason for indicating an RRC resume request reason reported by the UE; the S-temporary mobile station identity (S-TMSI); the closed subscriber group identity (CSG ID) of the serving cell in which the UE performs resuming; the global unique mobility management entity (MME) identity (GUMMEI); the cell access mode of the serving cell in which the UE performs resuming; the local IP access (LIPA) local gateway address of a base station in which the UE performs resuming; the indication information for indicating whether the base station in which the UE performs resuming is a relay or not; the GUMMEI type information; the broadband forum (BBF) address information of the base station in which the UE performs resuming; the selected IP traffic offload (SIPTO) local gateway address of the base station in which the UE performs resuming; and the local HeNB network identity (LHN ID) of a local HeNB network to which the base station in which the UE performs resuming belongs.

It is to be noted that the RRC setup reason may include signaling triggering or data triggering, but it is not limited thereto; the cell access mode may include a hybrid mode or a closed mode, but it is not limited thereto; the GUMMEI may include the public land mobile network identity (PLMN ID) of the MME, the identity (ID) of a group to which the MME belongs, or the MME code (MMEC), but it is not limited thereto; the CSG ID, the cell access mode and the BBF address information of the base station may exist only when the serving cell is a home base station cell; the LHN ID may be used for implementing the SIPTO service under the independent gateway architecture.

It is to be noted that information included in the above-mentioned specific information may be determined according to a scenario.

It is to be noted that the above-mentioned steps may, but are not limited to, be executed by the base station, the home base station, the relay node or the donor base station. The above-mentioned step S502 may be executed independently or may be executed in combination with step S504. Even if the step S502 is executed independently, the technical problem described above may also be solved.

In an embodiment of the present invention, when the base station is the home base station, the step S502 may be: sending, by the home base station, the UE context resume request message to the network side device via the home base station gateway of the home base station, where specific information carried by the UE context resume request message includes at least one of: the TAI, the ECGI, the RRC setup reason, the CSG ID, the cell access mode, the LIPA local gateway address, the BBF address information, the SIPTO local gateway address and the LHN ID.

The sending, by the home base station, the UE context resume request message to the network side device via the home base station gateway of the home base station may include: sending, by the home base station, a first UE context resume request message to a relay home base station gateway, where the first UE context resume request message includes at least one of information: S-TMSI, GUMMEI and GUMMEI type information and the above-mentioned information is used for performing the non-access stratum node selection function (NNSF) by the home base station gateway; and sending, by the home base station gateway, a second resume request message to the network side device, where specific information carried by the second resume request message includes at least one of: the TAI, the ECGI, the RRC setup reason, the CSG ID, the cell access mode, the LIPA local gateway address, the BBF address information, the SIPTO local gateway address and the LHN ID.

In an embodiment of the present invention, when the base station is the donor base station, the above-mentioned specific information may include at least one of: the TAI, the ECGI, the RRC setup reason, the LIPA local gateway address, the SIPTO local gateway address and the LHN ID.

It is to be noted that before the base station sends the UE context resume request message to the network side device, the method of this embodiment may further include: receiving, by the donor base station, the UE context resume request message sent from the relay node, where the UE context resume request message sent from the relay node at least carries information for indicating the relay.

The present invention will be further described with reference to exemplary embodiments.

The present invention provides an exemplary user equipment context resume method. The method includes the following steps described below.

The base station initiates the UE context resume request message to a core network element device. The message catties at least one of: the TAI information, which refers to the TAI information of a tracking area in which the UE sends the NAS message; the ECGI information, which refers to the ECGI information of a serving call in which the UE currently performs resuming; the RRC setup reason, which refers to a current RRC resume request reason reported by the UE and includes the signaling triggering, the data triggering and the like; the S-TMSI, which refers to a temporary UE identity; a CSG ID, which refers to the CSG ID of a serving cell in which the UE performs resuming and exists only when the serving cell is the home base station cell; the GUMMEI, which refers to information reported by the UE for identifying the MME and includes the PLMN ID of the MME, the ID of a group to which the MME belongs and the MMEC; the cell access mode, which refers to the cell access mode of a serving cell in which resuming is performed, includes the hybrid or closed mode and exists only when the serving cell is the home base station cell; the LIPA local gateway address, which refers to the 7LIPA local gateway address of a base station in which the UE performs resuming; a relay indication, which refers to indication information for indicating whether the base station in which the UE performs resuming is a relay or not; the GUMMEI type information, which refers to the GUMMEI type information of the MME reported by the UE; the BBF address of the base station, which refers to the BBF address of the base station in which resuming is performed and exists only when the serving cell is the home base station cell; the SIPTO local gateway address, which refers to the SIPTO local gateway address of the base station in which the UE preforms resuming; and an LHN ID, which refers to local HeNB network identity information of a local HeNB network to which the base station in which the UE performs resuming belongs and is used for implementing an SIPTO service under the independent gateway architecture.

The core network element device, after receiving the UE context resume request message, may perform one or more operations of the access control, the UE context resume, the bearer management and the UE context update on the current UE according to the information described above carried in the UE context resume request message. If the operations succeed, a UE context resume success message is sent to the base station; otherwise, a UE context resume failure message is sent to the base station.

In the above-mentioned method, the core network element device in the LTE system may be the MME, or a cellular-serving gateway node (C-SGN) which supports an NB-IoT user.

The method is applicable, but is not limited, to the LTE system.

The above-mentioned method may also be applicable to scenarios of the DeNB and home base station gateway. The DeNB and home base station gateway transfer the above-mentioned messages.

The user access control and the update of UE related information stored locally by a necessary network side device (for example, the MME) may be implemented during the UE context resume process by using the method provided by the present invention. The effective management of numerous low-power nodes is implemented by considering the processing under the DeNB and the home base station gateway. Therefore, exemplary embodiments of the present invention may meet the needs of the NB-IoT user and the smartphone user supporting the user plane scheme for implementing the effective user context message activation and wakeup during the UE context resume process, thereby improving network efficiency.

The present invention will be further described with reference to the scenarios.

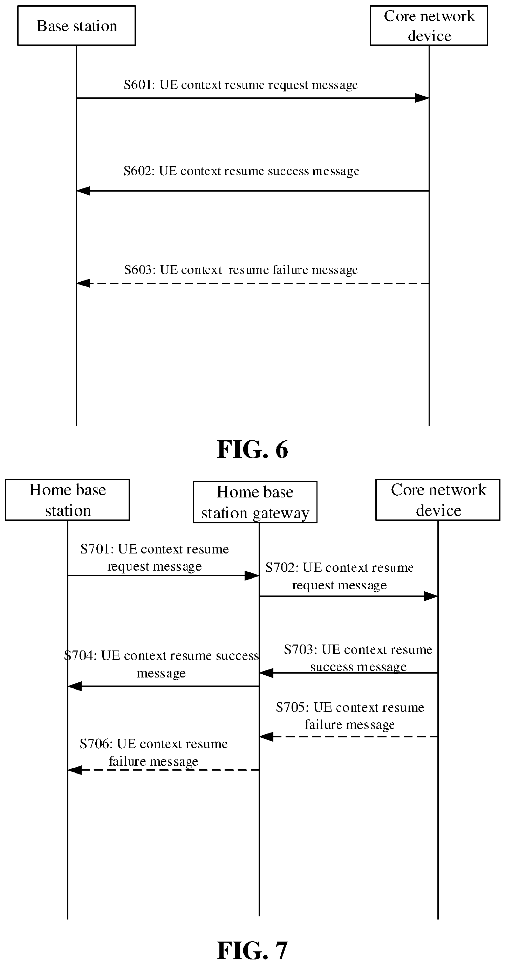

In the network architecture illustrated in FIG. 1, FIG. 6 is a flowchart of a user equipment context resume method in a scenario illustrated in FIG. 1 according to an exemplary embodiment of the present invention. As shown in FIG. 6, the method includes steps described below.

In step S601, the base station initiates a UE context resume request message to the core network device (for example, the MME), where the UE context resume request message carries one or more of the following information:
TAI information, which refers to the TAI information of a tracking area in which the UE sends the NAS message and may be used for the MME to perform the user access control;
ECGI information, which refers to the ECGI information of a serving call in which the UE currently performs resuming and may be used for the MME to perform the user access control;
RRC setup reason, which refers to a current RRC resume request reason reported by the UE, includes the signaling triggering, the data triggering and the like and may be used for the MME to perform the priority policy consideration;
CSG ID, which refers to the CSG ID of a serving cell in which the UE performs resuming, exists only when the serving cell is the home base station cell and may be used for the MME to perform the CSGuser access control validation;
cell access mode, which refers to the cell access mode of a serving cell in which resuming is performed, includes the hybrid or closed mode, exists only when the serving cell is the home base station cell and may be used for the MME to perform the CSG user access control validation;
LIPA local gateway address, which refers to the LIPA local gateway address of the base station in which the UE performs resuming and may be used for the MME to perform the local update of the UE related information;
BBF address of the base station, which refers to the BBF address of the base station in which resuming is performed, exists only when the serving cell is the home base station cell and may be used for the MME to perform the local update of the UE related information;
SIPTO local gateway address, which refers to the SIPTO local gateway address of the base station in which the UE preforms resuming and may be used for the MME to perform the local update of the UE related information; and
LHN ID, which refers to local HeNB network identity information of a local HeNB network to which the base station in which the UE performs resuming belongs, is used for implementing an SIPTO service under the independent gateway architecture and may be used for the MME to perform the local update of the UE related information.

In step S602, the MME, after receiving the UE context resume request message, performs one or more operations of the access control, the UE context resume, the bearer management and the UE context update on the current UE according to the information described above carried in the UE context resume request message. If the above-mentioned operations succeed, the MME sends a UE context resume success message to the base station; otherwise, the method goes to step S603.

In step S603, the MME sends a UE context resume failure message to the base station.

In the network architecture illustrated in FIG. 2, FIG. 7 is a flowchart of a user equipment context resume method in a scenario illustrated in FIG. 2 according to an exemplary embodiment of the present invention. As shown in FIG. 7, the method includes steps described below.

In step S701, the home base station initiates a UE context resume request message to the home base station gateway, where the UE context resume request message carries one or more of the following information:
TAI information, which refers to the TAI information of a tracking area in which the UE sends the NAS message;
ECGI information, which refers to the ECGI information of a serving call in which the UE currently performs resuming;
RRC setup reason, which refers to the current RRC resume request reason reported by the UE and includes the signaling triggering, the data triggering and the like;
S-TMSI, which refers to a temporary UE identity and may be used for the home base station gateway to implement the NNSF function;
CSG ID, which refers to the CSG ID of a serving cell in which the UE performs resuming and exists only when the serving cell is the home base station cell;
GUMMEI, which refers to information reported by the UE for identifying the MME, includes the PLMN ID of the MME, the ID of a group to which the MME belongs and the MMEC and may be used for the home base station gateway to implement the NNSF function;
cell access mode, which refers to the cell access mode of a serving cell in which resuming is performed, includes the hybrid or closed mode and exists only when the serving cell is the home base station cell;
LIPA local gateway address, which refers to the LIPA local gateway address of the base station in which the UE performs resuming;
GUMMEI type information, which refers to the GUMMEI type information of the MME reported by the UE and may be used for the home base station gateway to implement the NNSF function;
BBF address of the base station, which refers to the BBF address of the base station in which resuming is performed and exists only when the serving cell is the home base station cell;
SIPTO local gateway address, which refers to the SIPTO local gateway address of the base station in which the UE preforms resuming; and
LHN ID, which refers to local HeNB network identity information of a local HeNB network to which the base station in which the UE performs resuming belongs and is used for implementing an SIPTO service under the independent gateway architecture.

In step S702, the home base station gateway forwards the UE context resume request message to the MME, where the message does not need to include the S-TMSI, the GUMMEI or the GUMMEI type information.

In step S703, the MME, after receiving the UE context resume request message, performs one or more operations of the access control, the UE context resume, the bearer management and the UE context update on the current UE according to the information described above carried in the UE context resume request message. If the above-mentioned operations succeed, the MME sends a UE context resume success message to the home base station gateway; otherwise, the method goes to step S705.

In step S704, the home base station gateway sends the UE context resume success message to the home base station.

In step S705, the MME sends a UE context resume failure message to the home base station gateway.

In step S706, the home base station gateway sends the UE context resume failure message to the home base station.

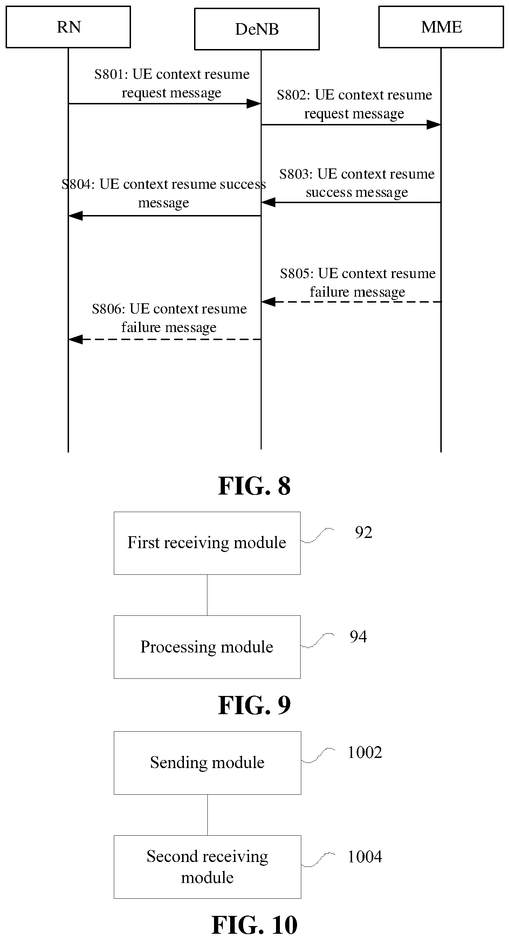

In the network architecture illustrated in FIG. 3, FIG. 8 is a flowchart of a user equipment context resume method in a scenario illustrated in FIG. 3 according to an exemplary embodiment of the present invention. As shown in FIG. 8, the method includes steps described below.

In step S801, the RN initiates a UE context resume request message to the DeNB, where the message carries one or more of the following information:
TAI information, which refers to the TAI information of a tracking area in which the UE sends the NAS message;
ECGI information, which refers to the ECGI information of a serving call in which the UE currently performs resuming;
RRC setup reason, which refers to the current RRC resume request reason reported by the UE and includes the signaling triggering, the data triggering and the like;
S-TMSI, which refers to a temporary UE identity and may be used for the DeNB to implement the NNSF function;
GUMMEI, which refers to information reported by the UE for identifying the MME, includes the PLMN ID of the MME, the ID of a group to which the MME belongs and the MMEC and may be used for the DeNB to implement the NNSF function;
GUMMEI type information, which refers to the GUMMEI type information of the MME reported by the UE and may be used for the DeNB to implement the NNSF function; and
relay indication, which refers to information for indicating whether the base station in which the UE performs resuming is a relay or not.

In step S802, the DeNB sends the UE context resume request message to the MME, where the message includes one or more of the following:
TAI information, which refers to the TAI information of a tracking area in which the UE sends the NAS message;
ECGI information, which refers to the ECGI information of a serving call in which the UE currently performs resuming;
RRC setup reason, which refers to the current RRC resume request reason reported by the UE and includes the signaling triggering, the data triggering and the like;
LIPA local gateway address, which refers to the LIPA local gateway address of the DeNB;
SIPTO local gateway address, which refers to the SIPTO local gateway address of the base station in which the UE preforms resuming; and
LHN ID, which refers to local HeNB network identity information of a local HeNB network to which the base station in which the UE performs resuming belongs and is used for implementing an SIPTO service under the independent gateway architecture.

In step S803, the MME, after receiving the UE context resume request message, performs one or more operations of the access control, the UE context resume, the bearer management and the UE context update on the current UE according to the information described above carried in the UE context resume request message. If the above-mentioned operations succeed, the MME sends a UE context resume success message to the DeNB; otherwise, the method goes to step S805.

In step S804, the DeNB sends the UE context resume success message to the RN.

In step S805, the MME sends a UE context resume failure message to the DeNB.

In step S806, the DeNB sends the UE context resume failure message to the RN.

It is to be noted that in the above-mentioned method, the core network element device (network side device) in the LTE system may be the MME, or the C-SGN which supports the NarrowBand-Internet of Things (NB-IoT) user. The method is applicable, but is not limited, to the LTE system.

From the description of the embodiments described above, it will be apparent to those skilled in the art that the methods in the embodiments described above may be implemented by software plus a necessary general-purpose hardware platform, or may of course be implemented by hardware; but in many cases, the former is a preferred implementation mode. Based on this understanding, the solution provided by the present invention substantially, or the part contributing to the existing art, may be embodied in the form of a software product. The software product is stored on a storage medium (such as a ROM/RAM, a magnetic disk or an optical disk) and includes several instructions for enabling a terminal device (which may be a mobile phone, a computer, a server or a network device) to execute the method according to multiple embodiment of the present invention.

### Embodiment 2

This embodiment further provides a user equipment context resume apparatus for implementing the above-mentioned embodiments and preferred embodiments. What has been described will not be repeated. As used below, the term "module" may be software, hardware or a combination thereof capable of implementing predetermined functions. The device in the embodiments described below is preferably implemented by software, but implementation by hardware or by a combination of software and hardware is also possible and conceived.

FIG. 9 is a block diagram 1 of a user equipment context resume apparatus according to an embodiment of the present invention. As shown in FIG. 9, the apparatus includes a first receiving module 92 and a processing module 94.

The first receiving module 92 is configured to receive a UE context resume request message sent from a base station, where the UE context resume request message carries at least one of the following specific information: information for user access control and information for performing update of information about a UE.

The processing module 94, which is connected to the above-mentioned first receiving module 92, is configured to perform at least one of the following operations on the UE according to the specific information: the user access control and the update of the information about the UE.

Through the above-mentioned apparatus, since at least one specific information of information for user access control and information for performing the update of information about a user is carried in the UE context resume request message, the UE context resume request message is received by the first receiving module 92, so that the network side device obtains the specific information, thereby solving the problem in the existing art in which the network side device cannot implement user access control or cannot update locally-stored user information in the suspend or resume mechanism.

It is to be noted that the specific information may include at least one of: a tracking area identity (TAI) of a tracking area in which the UE sends a non-access stratum (NAS) message; an evolved universal terrestrial radio access network cell global identifier (ECGI) of a serving cell in which the UE performs resuming; a radio resource control (RRC) setup reason for indicating an RRC resume request reason reported by the UE; an S-temporary mobile station identity (S-TMSI); a closed subscriber group identity (CSG ID) of the serving cell in which the UE performs resuming; a global unique mobility management entity (MME) identity (GUMMEI); a cell access mode of the serving cell in which the UE performs resuming; a local IP access (LIPA) local gateway address of a base station in which the UE performs resuming; indication information for indicating whether the base station in which the UE performs resuming is a relay or not; GUMMEI type information; broadband forum (BBF) address information of the base station in which the UE performs resuming; a selected IP traffic offload (SIPTO) local gateway address of the base station in which the UE performs resuming; and a local HeNB network identity (LHN ID) of a local HeNB network to which the base station in which the UE performs resuming belongs.

In an embodiment of the present invention, the above-mentioned first receiving module 92 is further configured to, when the base station is a home base station, receive the UE context resume request message sent from a home base station gateway of the home base station after the home base station gateway of the home base station performs a non-access stratum node selection function (NNSF) by using at least one of the following information included in the UE context resume request message sent from the home base station to the home base station gateway: S-TMSI, CUMMEI and CUMMEI type information, where the specific information carried by the UE context resume request message sent from the home base station gateway includes at least one of the following: the TAI, the ECGI, the RRC setup reason, the closed subscriber group identity (CSG ID) of the serving cell, the cell access mode of a serving cell in which the UE performs resuming, the local IP access (LIPA) local gateway address of the base station in which the UE performs resuming, the BBF address information of the base station in which the UE performs resuming, the selected IP traffic offload (SIPTO) local gateway address of the base station in which the UE performs resuming and the local HeNB network identity (LHN ID) of a local HeNB network to which the base station in which the UE performs resuming belongs.

In an embodiment of the present invention, when the base station is a donor base station, the above-mentioned specific information includes at least one of: the TAI, the ECGI, the RRC setup reason, the LIPA local gateway address, the SIPTO local gateway address and the LHN ID.

It is to be noted that the above-mentioned apparatus may be located in the network side device, such as the MME, but it is not limited thereto. The above base station may be a home base station, a general base station or a donor base station, but it is not limited thereto.

Another embodiment of the present invention further provides a user equipment context resume apparatus. FIG. 10 is a block diagram 2 of a user equipment context resume apparatus according to an embodiment of the present invention. As shown in FIG. 10, the apparatus includes a sending module 1002 and a second receiving module 1004.

The sending module 1002 is configured to send the UE context resume request message to the network side device, where the UE context resume request message carries at least one of the following specific information: information for user access control and information for performing update of information about the UE.

The second receiving module 1004, which is connected to the above-mentioned sending module 1002, is configured to receive a UE context resume success message sent from the network side device after at least one of the following operations is performed on the network side device according to the specific information: the user access control and the update of the information about the user.

Through the above-mentioned apparatus, since at least one specific information of information for user access control and information for performing the update of information about the user is carried in the UE context resume request message, the sending module 1002 sends the UE context resume request message to the network side device, so that the network side device obtains the specific information, thereby solving the problem in the existing art in which the network side device cannot implement user access control or cannot update locally-stored user information in the suspend or resume mechanism.

It is to be noted that the specific information may include at least one of: the tracking area identity (TAI) of a tracking area in which the UE sends a non-access stratum (NAS) message; the evolved universal terrestrial radio access network cell global identifier (ECGI) of a serving cell in which the UE performs resuming; the radio resource control (RRC) setup reason for indicating an RRC resume request reason reported by the UE; the S-temporary mobile station identity (S-TMSI); the closed subscriber group identity (CSG ID) of the serving cell in which the UE performs resuming; the global unique mobility management entity (MME) identity (GUMMEI); the cell access mode of the serving cell in which the UE performs resuming; the local IP access (LIPA) local gateway address of a base station in which the UE performs resuming; the indication information for indicating whether the base station in which the UE performs resuming is a relay or not; the GUMMEI type information; the broadband forum (BBF) address information of the base station in which the UE performs resuming; the selected IP traffic offload (SIPTO) local gateway address of the base station in which the UE performs resuming; and the local HeNB network identity (LHN ID) of a local HeNB network to which the base station in which the UE performs resuming belongs.

It is to be noted that the above-mentioned apparatus may be located in the base station, the home base station, the relay node or the donor base station, but it is not limited thereto. The sending module 1002 may exist independently (that is, the above-mentioned apparatus may include only the sending module 1002), or exist in combination with the above-mentioned second receiving module 1004. Even if the sending module 1002 exists independently, the technical problem described above may also be solved.

It is to be noted that the various modules described above may be implemented by software or hardware. Implementation by hardware may, but may not necessarily, be performed by the following methods: the various modules described above are implemented by a same processor or different processors.

### Embodiment 3

This embodiment further provides a machine-readable medium. In this embodiment, the machine-readable medium may be configured to store program codes for executing the steps of the method in the embodiment 1.

In this embodiment, the machine-readable medium may include, but is not limited to, a flash disk, a read-only memory (ROM), a random access memory (RAM), a mobile hard disk, a magnetic disk, an optical disk or another medium capable of storing program codes.

For examples in this embodiment, reference may be made to the examples described in the embodiments and exemplary embodiments described above, and the examples will not be repeated in this embodiment.

### Embodiment 4

This embodiment provides a network side device, including a processor and a memory. The memory stores a user equipment context resume program which, when executed by the processor, implements the steps of the user equipment context resume method illustrated in FIG. 4 in the embodiment 1 described above.

The processor may include, but is not limited to, a micro control unit (MCU), a field programmable gate array (FPGA) or another processing apparatus. The memory may be used for storing software programs and modules of application software, such as program instructions or modules corresponding to the user equipment context resume method in the embodiments of the present invention. The processor executes the software programs and modules stored in the memory so as to perform various function applications and data processing, that is, to implement the method described above. The memory may include a high-speed random access memory, and may further include a nonvolatile memory, such as one or more magnetic storage devices, flash memories or other nonvolatile solid-state memories. In some examples, the memory may further include memories that are remotely disposed with respect to the processor. Examples of such a network include, but are not limited to, the Internet, intranets, local area networks, mobile communication networks, and combinations thereof.

The network side device provided by this embodiment may further include a transmission apparatus which is used for receiving or sending data via one network. In one example, the transmission may be a radio frequency (RF) module, which is used for implementing the communication in a wireless way.

### Embodiment 5

This embodiment provides a base station, including a processor and a memory, where the memory stores a user equipment context resume program which, when executed by the processor, implements the steps of the user equipment context resume method illustrated in FIG. 5 in the embodiment 1 described above.

The processor may include, but is not limited to, a MCU, a FPGA or another processing apparatus. The memory may be used for storing software programs and modules of application software, such as program instructions or modules corresponding to the user equipment context resume method in the embodiments of the present invention. The processor executes the software programs and modules stored in the memory so as to perform various function applications and data processing, that is, to implement the method described above. The memory may include a high-speed random access memory, and may further include a nonvolatile memory, such as one or more magnetic storage devices, flash memories or other nonvolatile solid-state memories. In some examples, the memory may further include memories that are remotely disposed with respect to the processor. Examples of such a network include, but are not limited to, the Internet, intranets, local area networks, mobile communication networks, and combinations thereof.

The network side device provided by this embodiment may further include a transmission apparatus which is used for receiving or sending data via one network. In one example, the transmission may be a radio frequency (RF) module, which is used for implementing the communication in a wireless way.

### Embodiment 6

This embodiment provides a system, which includes a network side device and a base station.

The base station sends a UE context resume request message to the network side device. The network side device receives the UE context resume request message sent from the base station, where the UE context resume request message carries at least one of the following specific information: information for user access control and information for performing the update of information about a UE; and performs at least one of the following operations on the UE according to the specific information: the user access control and the update of the information about the UE.

For a description of the structure and processing process of the network side device and the base station provided in this embodiment, reference may be made to the embodiment described above, and thus no further details are provided herein.

It will be understood by those skilled in the art that functional modules/units in all or part of the steps of the method, the system and the device disclosed above may be implemented as software, firmware, hardware and appropriate combinations thereof. In the hardware implementation, the division of functional modules/units mentioned in the above description may not correspond to the division of physical components. For example, one physical component may have several functions, or one function or step may be executed jointly by several physical components. Some or all components may be implemented as software executed by processors such as digital signal processors or microcontrollers, hardware, or integrated circuits such as application specific integrated circuits. Such software may be distributed on a machine-readable medium (such as a computer-readable medium). The computer-readable medium may include a computer storage medium (or a non-transitory medium) and a communication medium (or a transitory medium). As is known to those skilled in the art, the term, computer storage medium, includes volatile and nonvolatile, removable and non-removable medium implemented in any method or technology for storing information (such as computer-readable instructions, data structures, program modules or other data). The computer storage medium include, but is not limited to, an RAM, an ROM, an EEPROM, a flash memory or other memory technologies, a CD-ROM, a digital versatile disc (DVD) or other optical disc storage, a magnetic cassette, a magnetic tape, a magnetic disk storage or other magnetic storage devices, or any other medium used for storing desired information and accessed by a computer. In addition, as is known to those skilled in the art, the communication medium generally include computer-readable instructions, data structures, program modules or other data in modulated data signals such as carriers or other transmission mechanisms, and may include any information delivery medium.

### INDUSTRIAL APPLICABILITY

A user equipment context resume method and apparatus are provided by embodiments of the present invention solve the problem in the existing art in which a network side device cannot implement user access control or cannot update locally-stored user information in the suspend or resume mechanism.

## Claims

1. A user equipment context resume method, performed by a core network element device, comprising:
receiving (S402) a user equipment, UE, context resume request message sent from a base station, **characterized in that** the UE context resume request message carries specified information, which is used for at least one of user access control and performing update of information about a UE, and which specified information comprises at least one of the following:
an evolved universal terrestrial radio access network cell global identifier, ECGI, of a serving cell in which the UE performs resuming;
a closed subscriber group identity, CSG ID, of the serving cell in which the UE performs resuming;
a cell access mode of the serving cell in which the UE performs resuming;
a local IP access, LIPA, local gateway address of a base station in which the UE performs resuming;
indication information for indicating whether the base station in which the UE performs resuming is a relay or not;
broadband forum, BBF, address information of the base station in which the UE performs resuming;
a selected IP traffic offload, SIPTO, local gateway address of the base station in which the UE performs resuming; and
a local HeNB network identity, LHN ID, of a local HeNB network to which the base station in which the UE performs resuming belongs;
performing (S404) at least one of the following operations on the UE according to the specified information: the user access control and the update of the information about the UE.

2. The method according to claim 1, wherein the specified information further comprises a global unique mobility management entity, MME, identity, GUMMEI, wherein the GUMMEI comprises a public land mobile network identity, PLMN ID, of the MME, an identity, ID, of a group to which the MME belongs, and an MME code, MMEC.

3. The method according to claim 1, wherein, when the base station is a home base station, the receiving a UE context resume request message sent from a base station comprises:
receiving the UE context resume request message sent from a home base station gateway of the home base station after the home base station gateway of the home base station performs a non-access stratum node selection function, NNSF, by using at least one of the following information comprised in the UE context resume request message sent from the home base station to the home base station gateway: S-TMSI, CUMMEI and CUMMEI type information, wherein the specified information carried by the UE context resume request message sent from the home base station gateway comprises at least one of the following:
a tracking area identity, TAI, of a tracking area in which the UE sends a non-access stratum, NAS, message; the ECGI; a radio resource control, RRC, setup reason for indicating an RRC resume request reason reported by the UE; the CSG ID; the cell access mode; the LIPA local gateway address; the BBF address information; the SIPTO local gateway address; and the LHN ID.

4. The method according to claim 1, wherein, when the base station is a donor base station, the specified information comprises at least one of the following:
a tracking area identity, TAI, of a tracking area in which the UE sends a non-access stratum, NAS, message; the ECGI; a radio resource control, RRC, setup reason for indicating an RRC resume request reason reported by the UE; the LIPA local gateway address; the SIPTO local gateway address; and the LHN ID.

5. A user equipment context resume method, performed by a base station, comprising:
sending (S502), by a base station, a user equipment, UE, context resume request message to a core network element device, **characterized in that** the UE context resume request message carries specified information, which is used for at least one of user access control and performing update of information about a UE, and which specified information comprises at least one of the following:
an evolved universal terrestrial radio access network cell global identifier, ECGI, of a serving cell in which the UE performs resuming;
a closed subscriber group identity, CSG ID, of the serving cell in which the UE performs resuming;
a cell access mode of the serving cell in which the UE performs resuming;
a local IP access, LIPA, local gateway address of a base station in which the UE performs resuming;
indication information for indicating whether the base station in which the UE performs resuming is a relay or not;
broadband forum, BBF, address information of the base station in which the UE performs resuming;
a selected IP traffic offload, SIPTO, local gateway address of the base station in which the UE performs resuming; and
a local HeNB network identity, LHN ID, of a local HeNB network to which the base station in which the UE performs resuming belongs.

6. The method according to claim 5, wherein, when the base station is a home base station, the sending, by a base station, a UE context resume request message to a core network element device comprises:
sending, by the home base station, the UE context resume request message to the network side via a home base station gateway of the home base station, wherein the specified information carried by the UE context resume request message comprises at least one of:
a tracking area identity, TAI, of a tracking area in which the UE sends a non-access stratum, NAS, message; the ECGI; a radio resource control, RRC, setup reason for indicating an RRC resume request reason reported by the UE the CSG ID; the cell access mode; the LIPA local gateway address; the BBF address information; the SIPTO local gateway address; and the LHN ID.

7. The method according to claim 6, wherein the sending, by the home base station, the UE context resume request message to the network side via a home base station gateway of the home base station comprises:
sending, by the base station, a first UE context resume request message to the home base station gateway, wherein the first UE context resume request message comprises at least one of the following information: an S-temporary mobile station identity, S-TMSI; a global unique mobility management entity, MME, identity, GUMMEI; and GUMMEI type information; wherein the information is used for performing a non-access stratum node selection function, NNSF; and
sending, by the home base station, a second resume request message to the core network element device, wherein specified information carried by the second resume request message comprises at least one of: a tracking area identity, TAI, of a tracking area in which the UE sends a non-access stratum, NAS, message; the ECGI; a radio resource control, RRC, setup reason for indicating an RRC resume request reason reported by the UE; the CSG ID; the cell access mode; the LIPA local gateway address; the BBF address information; the SIPTO local gateway address; and the LHN ID.

8. The method according to claim 5, wherein, when the base station is a donor base station, the specified information comprises at least one of: a tracking area identity, TAI, of a tracking area in which the UE sends a non-access stratum, NAS, message; the ECGI; a radio resource control, RRC, setup reason for indicating an RRC resume request reason reported by the UE; the LIPA local gateway address; the SIPTO local gateway address; and the LHN ID.

9. The method according to claim 8, wherein, before the sending, by a base station, a UE context resume request message to a core network element device, the method further comprises:
receiving, by the donor base station, a UE context resume request message sent from a relay node, wherein the UE context resume request message sent from the relay node at least carries information for indicating the relay.

10. A core network element device, comprising:
a first receiving module (92), which is configured to receive a user equipment, UE, context resume request message sent from a base station, **characterized in that** the UE context resume request message carries specified information, which is used for at least one of user access control and performing update of information about a UE, and which specified information comprises at least one of the following:
an evolved universal terrestrial radio access network cell global identifier, ECGI, of a serving cell in which the UE performs resuming;
a closed subscriber group identity, CSG ID, of the serving cell in which the UE performs resuming;
a cell access mode of the serving cell in which the UE performs resuming;
a local IP access, LIPA, local gateway address of a base station in which the UE performs resuming;
indication information for indicating whether the base station in which the UE performs resuming is a relay or not;
broadband forum, BBF, address information of the base station in which the UE performs resuming;
a selected IP traffic offload, SIPTO, local gateway address of the base station in which the UE performs resuming; and
a local HeNB network identity, LHN ID, of a local HeNB network to which the base station in which the UE performs resuming belongs;
a processing module (94), which is configured to perform at least one of the following operations on the UE according to the specified information: the user access control and the update of the information about the UE.

11. A base station, comprising:
a sending module (1002), which is configured to send a user equipment, UE, context resume request message to a core network element device, **characterized in that** the UE context resume request message carries specified information, which is used for at least one of user access control and performing update of information about a UE, and which specified information comprises at least one of the following:
an evolved universal terrestrial radio access network cell global identifier, ECGI, of a serving cell in which the UE performs resuming;
a closed subscriber group identity, CSG ID, of the serving cell in which the UE performs resuming;
a cell access mode of the serving cell in which the UE performs resuming;
a local IP access, LIPA, local gateway address of a base station in which the UE performs resuming;
indication information for indicating whether the base station in which the UE performs resuming is a relay or not;
broadband forum, BBF, address information of the base station in which the UE performs resuming;
a selected IP traffic offload, SIPTO, local gateway address of the base station in which the UE performs resuming; and
a local HeNB network identity, LHN ID, of a local HeNB network to which the base station in which the UE performs resuming belongs.

## Patentansprüche

1. Teilnehmereinrichtungskontextwiederaufnahmever fahren, das von einer Kernnetzwerkelementvorrichtung durchgeführt wird und Folgendes umfasst
Empfangen (S402) einer Teilnehmereinrichtungs(UE)-Kontextwiederaufnahmeanforderungsnachricht, die von einer Basisstation gesendet wird, **dadurch gekennzeichnet, dass** die UE-Kontextwiederaufnahmeanforderungsnachricht spezifizierte Informationen enthält, die für mindestens eines von einer Benutzerzugangssteuerung und dem Durchführen einer Aktualisierung von Informationen über eine UE verwendet werden, wobei die spezifizierten Informationen mindestens eines von Folgendem umfassen:
eine entwickelte universelle terrestrische globale Funkzugangsnetzwerkzellkennung, ECGI, einer bedienenden Zelle, in der die UE eine Wiederaufnahme durchführt;
eine geschlossene Teilnehmergruppenidentität, CSG ID, der bedienenden Zelle, in der die UE eine Wiederaufnahme durchführt;
einen Zellzugangsmodus der bedienenden Zelle, in der die UE eine Wiederaufnahme durchführt;
eine lokale IP-Adresse für den Zugang zu einem lokalen Gateway, LIPA, einer Basisstation, in der die UE eine Wiederaufnahme durchführt;
Anzeigeinformationen zum Anzeigen, ob die Basisstation, in der die UE eine Wiederaufnahme durchführt, ein Relais ist oder nicht;
Breitbandforums(BBF)-Adressinformationen der Basisstation, in der die UE eine Wiederaufnahme durchführt;
eine ausgewählte IP-Adresse eines lokalen Gateways für eine Verkehrsauslagerung, SIPTO, der Basisstation, in der die UE eine Wiederaufnahme durchführt; und
eine lokale HeNB-Netzwerkidentität, LHN ID, eines lokalen HeNB-Netzwerks, zu dem die Basisstation, in der die UE eine Wiederaufnahme durchführt, gehört;
Durchführen (S404) von mindestens eine der folgenden Operationen an der UE gemäß den spezifizierten Informationen: der Benutzerzugangssteuerung und der Aktualisierung der Informationen über die UE.

2. Verfahren nach Anspruch 1, wobei die spezifizierten Informationen ferner eine globale eindeutige Mobilitätsverwaltungsentitäts(MME)-Identität, GUMMEI, umfasst, wobei die GUMMEI eine öffentliche Landmobilfunknetzwerkidentität, PLMN ID, der MME, eine Identitäts-ID einer Gruppe, zu der die MME gehört, und einen MME-Code, MMEC, umfasst.

3. Verfahren nach Anspruch 1, wobei, wenn die Basisstation eine Heimbasisstation ist, das Empfangen einer UE-Kontextwiederaufnahmeanforderungsnachricht, die von einer Basisstation gesendet wird, Folgendes umfasst:
Empfangen der UE-Kontextwiederaufnahmeanforderungsnachricht, die von einem Heimbasisstationsgateway der Heimbasisstation gesendet wird, nachdem das Heimbasisstationsgateway der Heimbasisstation eine Nichtzugangsschichtknotenauswahlfunktion, NNSF, unter Verwendung von mindestens einer der folgenden Informationen, die in der UE-Kontextwiederaufnahmeanforderungsnachricht enthalten sind, die von der Heimbasisstation an das Heimbasisstationsgateway gesendet wird, durchgeführt hat: S-TMSI, CUMMEI und CUMMEI-Typinformationen, wobei die spezifizierten Informationen, die in der UE-Kontextwiederaufnahmeanforderungsnachricht enthalten sind, die vom Heimbasisstationsgateway gesendet wird, mindestens eines von Folgendem umfasst:
eine Verfolgungsgebietsidentität, TAI, eines Verfolgungsgebiets, in dem die UE eine Nichtzugangsschicht(NAS)-Nachricht sendet; die ECGI; einen Funkressourcensteuerungs(RRC)-Einrichtungsgrund zum Anzeigen eines RRC-Wiederaufnahmeanforderungsgrundes, der von der UE gemeldet wird; die CSG ID; den Zellzugangsmodus; die lokale LIPA-Gatewayadresse; die BBF-Adressinformationen; die lokale SIPTO-Gatewayadresse und die LHN ID.

4. Verfahren nach Anspruch 1, wobei, wenn die Basisstation eine Geberbasisstation ist, die spezifizierten Informationen mindestens eines von Folgendem umfassen:
eine Verfolgungsgebietsidentität, TAI, eines Verfolgungsgebiets, in dem die UE eine Nichtzugangsschicht(NAS)-Nachricht sendet; die ECGI; einen Funkressourcensteuerungs(RRC)-Einrichtungsgrund zum Anzeigen eines RRC-Wiederaufnahmeanforderungsgrundes, der von der UE gemeldet wird; die lokale LIPA-Gatewayadresse; die lokale SIPTO-Gatewayadresse und die LHN ID.

5. Teilnehmereinrichtungskontextwiederaufnahmever fahren, das von einer Basisstation durchgeführt wird und Folgendes umfasst:
Senden (S502) einer Teilnehmereinrichtungs(UE)-Kontextwiederaufnahmeanforderungsnachricht, durch eine Basisstation an eine Kernnetzwerkelementvorrichtung, **dadurch gekennzeichnet, dass** die UE-Kontextwiederaufnahmeanforderungsnachricht spezifizierte Informationen enthält, die für mindestens eines von einer Benutzerzugangssteuerung und dem Durchführen einer Aktualisierung von Informationen über eine UE verwendet werden, wobei die spezifizierten Informationen mindestens eines von Folgendem umfassen:
eine entwickelte universelle terrestrische globale Funkzugangsnetzwerkzellkennung, ECGI, einer bedienenden Zelle, in der die UE eine Wiederaufnahme durchführt;
eine geschlossene Teilnehmergruppenidentität, CSG ID, der bedienenden Zelle, in der die UE eine Wiederaufnahme durchführt;
einen Zellzugangsmodus der bedienenden Zelle, in der die UE eine Wiederaufnahme durchführt;
eine lokale IP-Adresse für den Zugang zu einem lokalen Gateway, LIPA, einer Basisstation, in der die UE eine Wiederaufnahme durchführt;
Anzeigeinformationen zum Anzeigen, ob die Basisstation, in der die UE eine Wiederaufnahme durchführt, ein Relais ist oder nicht;
Breitbandforums(BBF)-Adressinformationen der Basisstation, in der die UE eine Wiederaufnahme durchführt;
eine ausgewählte IP-Adresse eines lokalen Gateways für eine Verkehrsauslagerung, SIPTO, der Basisstation, in der die UE eine Wiederaufnahme durchführt; und
eine lokale HeNB-Netzwerkidentität, LHN ID, eines lokalen HeNB-Netzwerks, zu dem die Basisstation, in der die UE eine Wiederaufnahme durchführt, gehört.

6. Verfahren nach Anspruch 5, wobei, wenn die Basisstation eine Heimbasisstation ist, das Senden einer UE-Kontextwiederaufnahmeanforderungsnachricht durch eine Basisstation an eine Kernnetzwerkelementvorrichtung Folgendes umfasst:
Senden der UE-Kontextwiederaufnahmeanforderungsnachricht durch die Heimbasisstation via ein Heimbasisstationsgateway der Heimbasisstation an die Netzwerkseite, wobei die spezifizierten Informationen, die in der UE-Kontextwiederaufnahmeanforderungsnachricht enthalten sind, mindestens eines von Folgendem umfassen:
eine Verfolgungsgebietsidentität, TAI, eines Verfolgungsgebiets, in dem die UE eine Nichtzugangsschicht(NAS)-Nachricht sendet; die ECGI; einen Funkressourcensteuerungs(RRC)-Einrichtungsgrund zum Anzeigen eines RRC-Wiederaufnahmeanforderungsgrundes, der von der UE gemeldet wird; die CSG ID; den Zellzugangsmodus; die lokale LIPA-Gatewayadresse; die BBF-Adressinformationen; die lokale SIPTO-Gatewayadresse und die LHN ID.

7. Verfahren nach Anspruch 6, wobei das Senden der UE-Kontextwiederaufnahmeanforderungsnachricht durch die Heimbasisstation via ein Heimbasisstationsgateway der Heimbasisstation an die Netzwerkseite Folgendes umfasst:
Senden einer ersten UE-Kontextwiederaufnahmeanforderungsnachricht durch die Basisstation an das Heimbasisstationsgateway, wobei die erste UE-Kontextwiederaufnahmeanforderungsnachricht mindestens eine der folgenden Informationen umfasst:
eine S-temporäre Mobilstationsidentität, S-TMSI, eine globale eindeutige Mobilitätsverwaltungsentitäts(MME)-Identität, GUMMEI, und GUMMEI-Typinformationen; wobei die Informationen zum Durchführen einer Nichtzugangsschichtknotenauswahlfunktion, NNSF, verwendet werden; und
Senden einer zweiten Wiederaufnahmeanforderungsnachricht durch die Heimbasisstation an die Kernnetzwerkelementvorrichtung, wobei die spezifizierten Informationen, die in der zweiten Wiederaufnahmeanforderungsnachricht enthalten sind, mindestens eines von Folgendem umfassen: eine Verfolgungsgebietsidentität, TAI, eines Verfolgungsgebiets, in dem die UE eine Nichtzugangsschicht(NAS)-Nachricht sendet; die ECGI; einen Funkressourcensteuerungs(RRC)-Einrichtungsgrund zum Anzeigen eines RRC-Wiederaufnahmeanforderungsgrundes, der von der UE gemeldet wird; die CSG ID; den Zellzugangsmodus; die lokale LIPA-Gatewayadresse; die BBF-Adressinformationen; die lokale SIPTO-Gatewayadresse und die LHN ID.

8. Verfahren nach Anspruch 5, wobei, wenn die Basisstation eine Geberbasisstation ist, die spezifizierten Informationen mindestens eines von Folgendem umfassen: eine Verfolgungsgebietsidentität, TAI, eines Verfolgungsgebiets, in dem die UE eine Nichtzugangsschicht(NAS)-Nachricht sendet; die ECGI; einen Funkressourcensteuerungs(RRC)-Einrichtungsgrund zum Anzeigen eines RRC-Wiederaufnahmeanforderungsgrundes, der von der UE gemeldet wird; die lokale LIPA-Gatewayadresse; die lokale SIPTO-Gatewayadresse und die LHN ID.

9. Verfahren nach Anspruch 8, wobei das Verfahren vor dem Senden einer UE-Kontextwiederaufnahmeanforderungsnachricht durch eine Basisstation an eine Kernnetzwerkelementvorrichtung ferner Folgendes umfasst:
Empfangen einer UE-Kontextwiederaufnahmeanforderungsnachricht, die von einem Relaisknoten gesendet wird, durch die Geberbasisstation, wobei die UE-Kontextwiederaufnahmeanforderungsnachricht, die vom Relaisknoten gesendet wird, mindestens Informationen zum Anzeigen des Relais enthält.

10. Kernnetzwerkelementvorrichtung, die Folgendes umfasst:
ein erstes Empfangsmodul (92), das dazu ausgelegt ist, eine Teilnehmereinrichtungs(UE)-Kontextwiederaufnahmeanforderungsnachricht, die von einer Basisstation gesendet wird, zu empfangen, **dadurch gekennzeichnet, dass** die UE-Kontextwiederaufnahmeanforderungsnachricht spezifizierte Informationen enthält, die für mindestens eines von einer Benutzerzugangssteuerung und dem Durchführen einer Aktualisierung von Informationen über eine UE verwendet werden, wobei die spezifizierten Informationen mindestens eines von Folgendem umfassen:
eine entwickelte universelle terrestrische globale Funkzugangsnetzwerkzellkennung, ECGI, einer bedienenden Zelle, in der die UE eine Wiederaufnahme durchführt;
eine geschlossene Teilnehmergruppenidentität, CSG ID, der bedienenden Zelle, in der die UE eine Wiederaufnahme durchführt;
einen Zellzugangsmodus der bedienenden Zelle, in der die UE eine Wiederaufnahme durchführt;
eine lokale IP-Adresse für den Zugang zu einem lokalen Gateway, LIPA, einer Basisstation, in der die UE eine Wiederaufnahme durchführt;
Anzeigeinformationen zum Anzeigen, ob die Basisstation, in der die UE eine Wiederaufnahme durchführt, ein Relais ist oder nicht;
Breitbandforums(BBF)-Adressinformationen der Basisstation, in der die UE eine Wiederaufnahme durchführt;
eine ausgewählte IP-Adresse eines lokalen Gateways für eine Verkehrsauslagerung, SIPTO, der Basisstation, in der die UE eine Wiederaufnahme durchführt; und
eine lokale HeNB-Netzwerkidentität, LHN ID, eines lokalen HeNB-Netzwerks, zu dem die Basisstation, in der die UE eine Wiederaufnahme durchführt, gehört;
ein Verarbeitungsmodul (94), das dazu ausgelegt ist, mindestens eine der folgenden Operationen an der UE gemäß den spezifizierten Informationen durchzuführen: die Benutzerzugangssteuerung und die Aktualisierung der Informationen über die UE.

11. Basisstation, die Folgendes umfasst:
ein Sendemodul (1002), das dazu ausgelegt ist, eine Teilnehmereinrichtungs(UE)-Kontextwiederaufnahmeanforderungsnachricht an eine Kernnetzwerkelementvorrichtung zu senden, **dadurch gekennzeichnet, dass** die UE-Kontextwiederaufnahmeanforderungsnachricht spezifizierte Informationen enthält, die für mindestens eines von einer Benutzerzugangssteuerung und dem Durchführen einer Aktualisierung von Informationen über eine UE verwendet werden, wobei die spezifizierten Informationen mindestens eines von Folgendem umfassen:
eine entwickelte universelle terrestrische globale Funkzugangsnetzwerkzellkennung, ECGI, einer bedienenden Zelle, in der die UE eine Wiederaufnahme durchführt;
eine geschlossene Teilnehmergruppenidentität, CSG ID, der bedienenden Zelle, in der die UE eine Wiederaufnahme durchführt;
einen Zellzugangsmodus der bedienenden Zelle, in der die UE eine Wiederaufnahme durchführt;
eine lokale IP-Adresse für den Zugang zu einem lokalen Gateway, LIPA, einer Basisstation, in der die UE eine Wiederaufnahme durchführt;
Anzeigeinformationen zum Anzeigen, ob die Basisstation, in der die UE eine Wiederaufnahme durchführt, ein Relais ist oder nicht;
Breitbandforums(BBF)-Adressinformationen der Basisstation, in der die UE eine Wiederaufnahme durchführt;
eine ausgewählte IP-Adresse eines lokalen Gateways für eine Verkehrsauslagerung, SIPTO, der Basisstation, in der die UE eine Wiederaufnahme durchführt; und
eine lokale HeNB-Netzwerkidentität, LHN ID, eines lokalen HeNB-Netzwerks, zu dem die Basisstation, in der die UE eine Wiederaufnahme durchführt, gehört.

## Revendications

1. Procédé de reprise de contexte d'équipement d'utilisateur, réalisé par un dispositif d'élément de réseau central, comprenant de :
recevoir (S402) un message de demande de reprise de contexte d'équipement d'utilisateur, UE, envoyé par une station de base, **caractérisé en ce que** le message de demande de reprise de contexte d'UE transporte des informations spécifiées qui sont utilisées pour au moins une parmi une commande d'accès d'utilisateur et la réalisation d'une mise à jour d'informations sur un UE, et lesquelles informations spécifiées comprennent au moins l'un des éléments suivants :
un identifiant global de cellule de réseau d'accès radio terrestre universel évolué, ECGI, d'une cellule de desserte dans laquelle l'UE réalise une reprise ;
une identité de groupe d'abonnés fermé, ID de CSG, de la cellule de desserte dans laquelle l'UE réalise une reprise ;
un mode d'accès à la cellule de la cellule de desserte dans laquelle l'UE réalise une reprise ;
une adresse de passerelle locale d'accès IP local, LIPA, d'une station de base dans laquelle l'UE réalise une reprise ;
des informations d'indication pour indiquer si la station de base dans laquelle l'UE réalise une reprise est un relais ou non ;
des informations d'adresse de forum à large bande, BBF, de la station de base dans laquelle l'UE réalise une reprise ;
une adresse de passerelle locale de délestage de trafic IP sélectionné, SIPTO, de la station de base dans laquelle l'UE réalise une reprise ; et
une identité de réseau HeNB local, ID LHN, d'un réseau HeNB local auquel appartient la station de base dans laquelle l'UE réalise une reprise ;
réaliser (S404) au moins l'une des opérations suivantes sur l'UE selon les informations spécifiées : la commande d'accès d'utilisateur et la mise à jour des informations sur l'UE.

2. Procédé selon la revendication 1, dans lequel les informations spécifiées comprennent en outre une identité d'entité de gestion de mobilité, MME, unique globale, GUMMEI, dans lequel la GUMMEI comprend une identité de réseau mobile terrestre public, ID PLMN, de la MME, une identité, ID, d'un groupe auquel la MME appartient, et un code MME, MMEC.

3. Procédé selon la revendication 1, dans lequel, lorsque la station de base est une station de base domestique, la réception d'un message de demande de reprise de contexte d'UE envoyé par une station de base comprend de :
recevoir le message de demande de reprise de contexte d'UE envoyé par une passerelle de station de base domestique de la station de base domestique après que la passerelle de station de base domestique de la station de base domestique a réalisé une fonction de sélection de noeud de strate sans accès, NNSF, en utilisant au moins une des informations suivantes comprises dans le message de demande de reprise de contexte d'UE envoyé par la station de base domestique à la passerelle de station de base domestique : une S-TMSI, une GUMMEI et des informations de type CUMMEI, dans lequel les informations spécifiées transportées par le message de demande de reprise de contexte d'UE envoyé par la passerelle de station de base domestique comprennent au moins l'un des éléments suivants :
une identité de zone de suivi, TAI, d'une zone de suivi dans laquelle l'UE envoie un message de strate de non-accès, NAS ; l'ECGI ; une raison d'établissement de commande de ressources radio, RRC, pour indiquer une raison de demande de reprise RRC signalée par l'UE ; l'ID de CSG ; le mode d'accès à la cellule ; l'adresse de passerelle locale LIPA ; les informations d'adresse BBF ; l'adresse de passerelle locale SIPTO ; et l'ID de LHN.

4. Procédé selon la revendication 1, dans lequel, lorsque la station de base est une station de base donneuse, les informations spécifiées comprennent au moins l'un des éléments suivants :
une identité de zone de suivi, TAI, d'une zone de suivi dans laquelle l'UE envoie un message de strate de non-accès, NAS ; l'ECGI ; une raison d'établissement de commande de ressources radio, RRC, pour indiquer une raison de demande de reprise RRC signalée par l'UE ; l'adresse de passerelle locale LIPA ; l'adresse de passerelle locale SIPTO ; et l'ID de LHN.

5. Procédé de reprise de contexte d'équipement d'utilisateur, réalisé par une station de base comprenant de :
envoyer (S502), par une station de base, un message de demande de reprise de contexte d'équipement d'utilisateur, UE, à un dispositif d'élément de réseau central, **caractérisé en ce que** :
le message de demande de reprise de contexte d'UE transporte des informations spécifiées qui sont utilisées pour au moins une parmi une commande d'accès d'utilisateur et la réalisation d'une mise à jour d'informations sur un UE, et lesquelles informations spécifiées comprennent au moins l'un des éléments suivants :
un identifiant global de cellule de réseau d'accès radio terrestre universel évolué, ECGI, d'une cellule de desserte dans laquelle l'UE réalise une reprise ;
une identité de groupe d'abonnés fermé, ID de CSG, de la cellule de desserte dans laquelle l'UE réalise une reprise ;
un mode d'accès à la cellule de la cellule de desserte dans laquelle l'UE réalise une reprise ;
une adresse de passerelle locale d'accès IP local, LIPA, d'une station de base dans laquelle l'UE réalise une reprise ;
des informations d'indication pour indiquer si la station de base dans laquelle l'UE réalise une reprise est un relais ou non ;
des informations d'adresse de forum à large bande, BBF, de la station de base dans laquelle l'UE réalise une reprise ;
une adresse de passerelle locale de délestage de trafic IP sélectionné, SIPTO, de la station de base dans laquelle l'UE réalise une reprise ; et
une identité de réseau HeNB local, ID LHN, d'un réseau HeNB local auquel appartient la station de base dans laquelle l'UE réalise une reprise.

6. Procédé selon la revendication 5, dans lequel, lorsque la station de base est une station de base domestique, l'envoi par une station de base, d'un message de demande de reprise de contexte d'UE à un dispositif d'élément de réseau central comprend de :
envoyer, par la station de base domestique, le message de demande de reprise de contexte d'UE au côté réseau via une passerelle de station de base domestique de la station de base domestique, dans lequel les informations spécifiées transportées par le message de demande de reprise de contexte d'UE comprennent au moins l'un parmi :
une identité de zone de suivi, TAI, d'une zone de suivi dans laquelle l'UE envoie un message de strate de non-accès, NAS ; l'ECGI ; une raison d'établissement de commande de ressources radio, RRC, pour indiquer une raison de demande de reprise RRC signalée par l'UE ; l'ID de CSG ; le mode d'accès à la cellule ; l'adresse de passerelle locale LIPA ; les informations d'adresse BBF ; l'adresse de passerelle locale SIPTO ; et l'ID de LHN.

7. Procédé selon la revendication 6, dans lequel l'envoi, par la station de base domestique, du message de demande de reprise de contexte d'UE au côté réseau via une passerelle de station de base domestique de la station de base domestique comprend de :
envoyer, par la station de base, un premier message de demande de reprise de contexte d'UE à la passerelle de station de base domestique, dans lequel le premier message de demande de reprise de contexte d'UE comprend au moins une des informations suivantes : une identité de station mobile temporaire S, S-TMSI ; une identité d'entité de gestion de mobilité, MME, unique globale, GUMMEI ; des informations de type GUMMEI ; dans lequel les informations sont utilisées pour réaliser une fonction de sélection de noeud de strate sans accès, NNSF ; et
envoyer, par la station de base domestique, un deuxième message de demande de reprise au dispositif d'élément de réseau central, dans lequel des informations spécifiées transportées par le deuxième message de demande de reprise comprennent au moins l'un parmi : une identité de zone de suivi, TAI, d'une zone de suivi dans laquelle l'UE envoie un message de strate de non-accès, NAS ; l'ECGI ; une raison d'établissement de commande de ressources radio, RRC, pour indiquer une raison de demande de reprise RRC signalée par l'UE ; l'ID de CSG ; le mode d'accès à la cellule ; l'adresse de passerelle locale LIPA ; les informations d'adresse BBF ; l'adresse de passerelle locale SIPTO ; et l'ID de LHN.

8. Procédé selon la revendication 5, dans lequel, lorsque la station de base est une station de base donneuse, les informations spécifiées comprennent au moins l'un parmi : une identité de zone de suivi, TAI, d'une zone de suivi dans laquelle l'UE envoie un message de strate de non-accès, NAS ; l'ECGI ; une raison d'établissement de commande de ressources radio, RRC, pour indiquer une raison de demande de reprise RRC signalée par l'UE ; l'adresse de passerelle locale LIPA ; l'adresse de passerelle locale SIPTO ; et l'ID de LHN.

9. Procédé selon la revendication 8, dans lequel, avant l'envoi par une station de base, d'un message de demande de reprise de contexte d'UE à un dispositif d'élément de réseau central, le procédé comprend en outre de :
recevoir, par la station de base donneuse, un message de demande de reprise de contexte d'UE envoyé par un noeud de relais, dans lequel le message de demande de reprise de contexte d'UE envoyé par le noeud de relais transporte au moins des informations pour indiquer le relais.

10. Dispositif d'élément de réseau central, comprenant :
un premier module de réception (92), qui est configuré pour recevoir un message de demande de reprise de contexte d'équipement d'utilisateur, UE, envoyé par une station de base, **caractérisé en ce que** le message de demande de reprise de contexte d'UE transporte des informations spécifiées qui sont utilisées pour au moins une parmi une commande d'accès d'utilisateur et la réalisation d'une mise à jour d'informations sur un UE, et lesquelles informations spécifiées comprennent au moins l'un des éléments suivants :
un identifiant global de cellule de réseau d'accès radio terrestre universel évolué, ECGI, d'une cellule de desserte dans laquelle l'UE réalise une reprise ;
une identité de groupe d'abonnés fermé, ID de CSG, de la cellule de desserte dans laquelle l'UE réalise une reprise ;
un mode d'accès à la cellule de la cellule de desserte dans laquelle l'UE réalise une reprise ;
une adresse de passerelle locale d'accès IP local, LIPA, d'une station de base dans laquelle l'UE réalise une reprise ;
des informations d'indication pour indiquer si la station de base dans laquelle l'UE réalise une reprise est un relais ou non ;
des informations d'adresse de forum à large bande, BBF, de la station de base dans laquelle l'UE réalise une reprise ;
une adresse de passerelle locale de délestage de trafic IP sélectionné, SIPTO, de la station de base dans laquelle l'UE réalise une reprise ; et
une identité de réseau HeNB local, ID LHN, d'un réseau HeNB local auquel appartient la station de base dans laquelle l'UE réalise une reprise ;
un module de traitement (94), qui est configuré pour réaliser au moins l'une des opérations suivantes sur l'UE selon les informations spécifiées : la commande d'accès d'utilisateur et la mise à jour des informations sur l'UE.

11. Station de base, comprenant :
un module d'envoi (1002), qui est configuré pour envoyer un message de demande de reprise de contexte d'équipement d'utilisateur, UE, à un dispositif d'élément de réseau central, **caractérisée en ce que** le message de demande de reprise de contexte d'UE transporte des informations spécifiées qui sont utilisées pour au moins une parmi une commande d'accès d'utilisateur et la réalisation d'une mise à jour d'informations sur un UE, et lesquelles informations spécifiées comprennent au moins l'un des éléments suivants :
un identifiant global de cellule de réseau d'accès radio terrestre universel évolué, ECGI, d'une cellule de desserte dans laquelle l'UE réalise une reprise ;
une identité de groupe d'abonnés fermé, ID de CSG, de la cellule de desserte dans laquelle l'UE réalise une reprise ;
un mode d'accès à la cellule de la cellule de desserte dans laquelle l'UE réalise une reprise ;
une adresse de passerelle locale d'accès IP local, LIPA, d'une station de base dans laquelle l'UE réalise une reprise ;
des informations d'indication pour indiquer si la station de base dans laquelle l'UE réalise une reprise est un relais ou non ;
des informations d'adresse de forum à large bande, BBF, de la station de base dans laquelle l'UE réalise une reprise ;
une adresse de passerelle locale de délestage de trafic IP sélectionné, SIPTO, de la station de base dans laquelle l'UE réalise une reprise ; et
une identité de réseau HeNB local, ID LHN, d'un réseau HeNB local auquel appartient la station de base dans laquelle l'UE réalise une reprise.
